# EUROPÄISCHE PATENTSCHRIFT

(11) **EP 1 182 120 B1**
(45) Veröffentlichungstag und Bekanntmachung des Hinweises auf die Patenterteilung: **04.10.2006**
(21) Anmeldenummer: 01112239.7
(22) Anmeldetag: 18.05.2001
(51) Int. Cl.: B62D 53/08

(54) **Lageranordnung für Sattelschlepperkupplungen**
Bearing assembly for fifth wheel hitch
Ensemble de palier pour attelage de semi-remorque

(30) Priorität: 16.08.2000 DE 10040608
(43) Veröffentlichungstag der Anmeldung: 27.02.2002
(73) Patentinhaber: Georg Fischer Verkehrstechnik GmbH, 78224 Singen (DE)
(72) Erfinder: Kreutzarek, Udo, 78224 Singen/Beuren (DE)
(74) Vertreter: Weiss, Wolfgang

(56) Entgegenhaltungen:
- EP-A- 0 051 113
- EP-A- 0 158 123
- GB-A- 1 430 011
- US-A- 5 435 194

## Beschreibung

Die Erfindung bezieht sich auf eine Lageranordnung für Sattelschlepperkupplungen umfassend eine Sattelkupplungsplatte zur Kupplung eines Sattelzugfahrzeuges mit einem Auflieger und zur Aufsattelung des Aufliegers auf dem Sattelzugfahrzeug und einen Lagerbock mit einer im Wesentlichen kreisförmig ausgebildeten Lagerfläche zur Lagerung der Kupplungsplatte gegenüber dem Sattelzugfahrzeug, wobei auf der Unterseite der Kupplungsplatte einen Aufnahmebereich zur Aufnahme der Lagerfläche des Lagerbocks ausgebildet ist.

In Lastkraftwagenzügen werden das Sattelzugfahrzeug und der Auflieger mittels einer Sattelkupplung miteinander verbunden. Die Sattelkupplung besteht im Wesentlichen aus einer Sattelkupplungsplatte am Sattelzugfahrzeug und einen sogenannten Königszapfen am Auflieger. Die Kupplungsplatte ist gegenüber dem Sattelzugfahrzeug in einem Lagerbock in der Richtung quer zur Fahrtrichtung schwenkbar gelagert. Bei der Lagerung wirken auf die miteinander zusammenwirkenden Lagerflächen grosse Kräfte. Im Betriebsfall können Sattelkupplungen mit mehr als 30 to belastet werden. Bei dieser hohen Beanspruchung ist das spielfreie Zusammenwirken der Lagerflächen von grösster Bedeutung. Ein spielfreier Sitz kann durch eine Nachbearbeitung der Lagerflächen an der Unterseite der Kupplungsplatte erreicht werden. Bei einem grossen Gussteil wie die Kupplungsplatte ist eine präzise Nachbearbeitung relativ aufwendig. Der Verschleiss der Lagerflächen, der während des Betriebes auftritt, kann durch Schmierung hinausgezögert werden.

Aus der DE 44 02 526 C2 ist eine Sattelkupplung mit einer schwenkbar gelagerten Kupplungsplatte mit Sensoren zur Messung der auf die Kupplungsplatte wirkenden Kräften bekannt die die Merkmale des Oberbegriffs des Anspruchs 1 aufweist. Die Kupplungsplatte ist mittels Bolzen in dem Lagerbock gelagert und zur Federung werden zwischen Kupplungsplatte und Lagerbock einerseits und zwischen Lagerbock und Bolzen andererseits zwei Stützelemente aus Gummi oder Elastomer eingelegt Diese Anordnung ist relativ aufwendig und schwer zu reparieren. Durch die Schmierung wird die Lebensdauer der Gummiteile eher verkürzt als verlängert.
Bevorzugte Weiterbildungen der Erfindung ergeben sich aus den abhängigen Ansprüchen.

Ausgehend von diesem Stand der Technik ist es Aufgabe der Erfindung, eine Lageranordnung für Sattelschlepperkupplungen anzugeben, die aus möglichst wenig Einzelteilen aufgebaut ist, die keine Nachbearbeitung der Kupplungsplatte erfordert und eine möglichst lange Lebensdauer ohne Unterhalt und ohne Vergrösserung des Lagerspieles gewährleistet.

Diese Aufgabe wird mit den kennzeichnenden Merkmalen des Anspruchs 1 gelöst.

Vorteilhafte Weiter bildungen der Erfindung sind in den abhängigen Ansprüchen 1 bis 7 angegeben.

Ein Ausführungsbeispiel der Erfindung wird anhand der Figuren beschrieben. Es zeigen:
Figur 1 eine perspektivische Sicht auf einem Teil einer Sattelkupplung mit einer erfindungsgemässen Lageranordnung,
Figur 2 einen Schnitt durch eine zusammengebaute Lageranordnung für Sattelkupplungen,
Figur 3 eine perspektivische Sicht auf einem Lagereinsatz vor dem Einbau in die Lageranordnung von Figur 2,
Figur 4 eine vergrösserte Sicht auf dem Lagereinsatz von Figur 3 und
Figur 5 eine weitere Sicht auf dem Lagereinsatz von Figur 3.

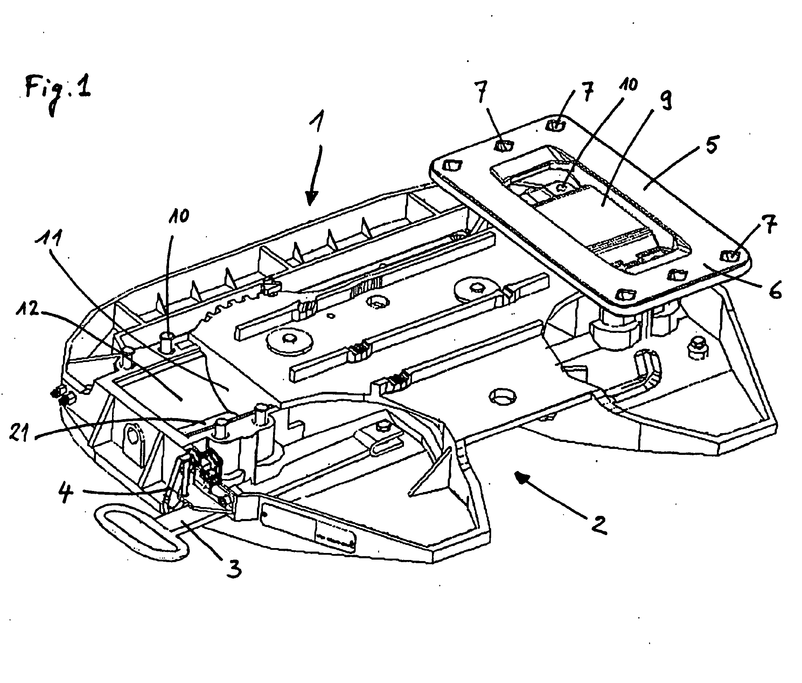

In Figur 1 ist perspektivisch eine Sattelkupplungsplatte 1 einer Sattelkupplung für Schwerlastkraftwagen dargestellt. In Figur 1 ist die Kupplungsplatte 1 mit Sicht auf die Unterseite dargestellt. Die Kupplungsplatte 1 weist auf seiner in Fahrtrichtung nach rückwärts zeigenden Seite ein Kupplungsmaul 2 auf, in das einen hier nicht dargestellten sogenannten Königszapfen eines Sattelaufliegers eingebracht werden kann. In Figur 1 sind auch ein Entriegelungshebel 3 und ein Karabinerhaken 4 ersichtlich, die den Königszapfen im eingekuppelten Zustand in die Sattelkupplung sichern. An der Unterseite der Kupplungsplatte 1 sind links und rechts normalerweise je ein Lagerbock 5 befestigt. Die Kupplungsplatte 1 ist quer zur Fahrtrichtung in den Lagerböcken 5 schwenkbar gelagert, die wiederum mittels einer Schraubverbindung mit tragenden Teilen eines Sattelzugfahrzeuges, beispielsweise mit den Längsträgern, die hier nicht dargestellt sind, verbunden ist.

Auf der rechten Seite von Figur 1 ist der Lagerbock 5 zusammengebaut mit der Unterseite der Kupplungsplatte 1 dargestellt. Der Lagerbock 5 besteht aus einem Flansch 6, der sechs Durchgänge 7 für Schrauben zur Schraubverbindung mit den tragenden Teilen des Sattelzugfahrzeuges aufweist, und aus einem mit dem Flansch 6 einstückig verbundenen, jedoch beabstandet oberhalb vom Flansch 6 liegenden Lagerbereich 8, der in Figur 2 ersichtlich ist und beschrieben wird. Der Lagerbock 5 ist mittels eines Spannbügels 9 und mittels vier Schrauben 10 an die Unterseite der Kupplungsplatte 1 befestigt. Zwischen dem Spannbügel 9 und der Unterseite der Kupplungsplatte 1 ist ein Aufnahmebereich 11 ausgebildet, in der eine Lageranordnung eingebaut ist, die eine Lagerung und eine Schwenkung der Kupplungsplatte 1 quer zur Fahrtrichtung ermöglicht. Auf der linken Seite wurden der Lagerbock 5 und der Spannbügel 9 weggelassen um die Sicht auf einem Teil der Lageranordnung freizugeben. In dem linken Aufnahmebereich 11 an der Unterseite der Kupplungsplatte 1 ist einen Lagereinsatz 12 dargestellt.

In Figur 2 ist einen Schnitt durch die zusammengebaute Lageranordnung dargestellt. Figur 2 stellt nur Teilbereiche der Kupplungsplatte 1 und des Lagerbocks 5 dar. Der Schnitt von Figur 2 ist in die Fahrtrichtung des Sattelzugfahrzeuges gelegt worden. Der Lagerbereich 8 des Lagerbocks 5 weist eine im Wesentlichen kreisförmige Lagerfläche 13 auf, die wie ein Teil der Aussenfläche eines Zylinders ausgebildet ist. Die Achse dieses Zylinders verläuft quer zur Fahrtrichtung des Sattelzugfahrzeuges. Die Kupplungsplatte 1, die auf diese Lagerfläche 13 gelagert wird, kann somit eine Schwenkbewegung quer zur Fahrtrichtung durchführen.

Der Lagereinsatz 12 befindet sich im eingebauten Zustand im Aufnahmebereich 11 zwischen der Unterseite der Kupplungsplatte 1 und der Lagerfläche 13 des Lagerbocks 5. Der Lagereinsatz 12 weist eine Lagerpfanne 14 mit einer Lageraufnahmefläche15 auf, die in Übereinstimmung mit der Lagerfläche 13 des Lagerbocks 5 ebenfalls kreisförmig ausgebildet ist. Die Lageraufnahmefläche 15 des Lagereinsatzes 12 weist zumindest im zusammengebauten Zustand die gleiche Kreisform auf wie die Lagerfläche 13 des Lagerbocks 5. Dadurch wird erreicht, dass die Lagerflächen 13,15 formgleich und spielfrei in Übereinstimmung miteinander zusammenwirken. Der Lagerbereich 8 des Lagerbocks 5 wird im Aufnahmebereich 11 festgehalten von dem Spannbügel 9, der mit den Schrauben 10 an die Unterseite der Kupplungsplatte 1 befestigt wird. Zwischen dem Spannbügel 9 und dem Lagerbereich 8 des Lagerbocks 5 kann eine Platte 16 eingelegt werden, die aus Kunststoff oder einem anderen elastischen Material hergestellt ist. Die Kompensationsplatte 16 dient zur Kompensation von all zu grossen Erschütterungen, die während des Betriebes auf die Lageranordnung einwirken können.

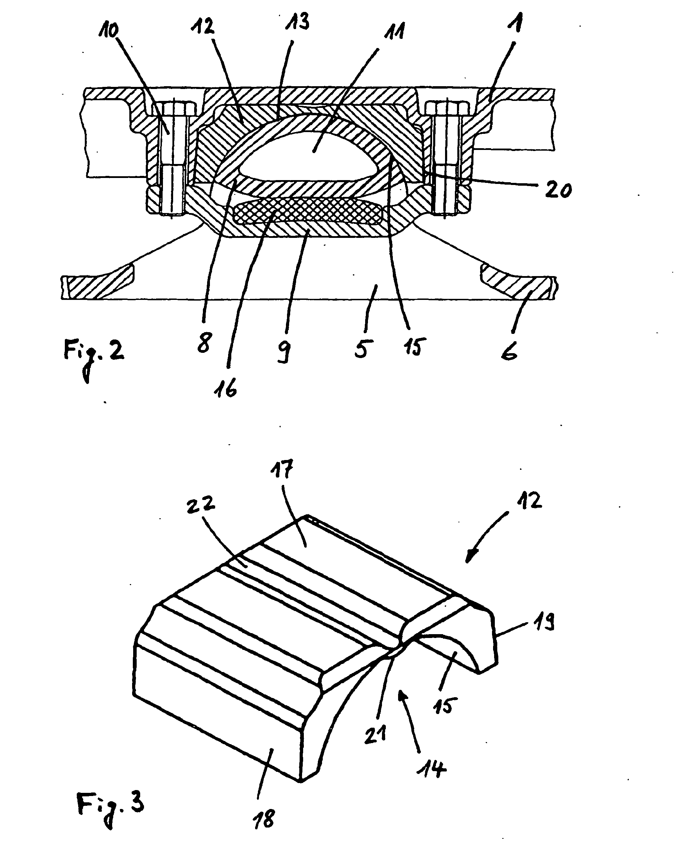

In den Figuren 3, 4 und 5 ist der Lagereinsatz 12 für sich alleine, vor dem Einbau in dem Aufnahmebereich 11 an der Unterseite der Kupplungsplatte 1, dargestellt. Der Lagereinsatz 12 kann in einem Kunststoffspritzgussverfahren einstückig hergestellt werden. Als Kunststoff wird ein Material gewählt, das selbstschmierend und abriebfest ist und das sich durch einen kleinen Reibungskoeffizient und eine sehr hohe Formbeständigkeit auszeichnet. Diese Anforderungen werden beispielsweise von einem Ultra-Hoch-Molekulargewichts-Polyäthylen (UHMW-PE) erfüllt. In Figur 3 ist der Lagereinsatz 12 perspektivisch dargestellt. Auf der unteren Seite des Lagereinsatzes 12 ist die Lageraufnahmefläche 15 ersichtlich. Auf der gegenüber der Lageraufnahmefläche 15 liegenden Seiten ist eine Stützfläche 17, eine Vorderfläche 18 und eine Rückfläche 19 ausgebildet.

Die Stützfläche 17 auf der Oberseite des Lagereinsatzes 12 liegt im zusammengebauten Zustand auf der Unterseite des Aufnahmebereiches 11 auf und fängt hier die Kräfte auf, die in der Richtung senkrecht zur Kupplungsplatte 1 wirken. Die Vorderfläche 18 und die Rückfläche 19 des Lagereinsatzes 12 sind auf einem Abstand voneinander angeordnet der im Wesentlichen übereinstimmt mit dem Abstand zwischen den Seitenwänden des Aufnahmebereiches 12. Beim Einbau in den Aufnahmebereich 12 wird zwischen dem Aufnahmebereich und dem Lagereinsatz eine Quetsch-Dehnfuge 20 gebildet. Durch diese Übereinstimmung und durch die Ausbildung der Quetsch-Dehnfuge 20 wird erreicht, dass das möglicherweise noch vorhandene Spiel zwischen den zusammenwirkenden Lagerflächen 13, 15 ausgeglichen wird. Unter den auftretenden hohen Flächendrücken wird sich das Kunststoffmaterial verformen und es wird einen spielfreien Sitz einerseits zwischen Lagerbock 5 und Lagereinsatz 12 und andererseits zwischen Lagereinsatz 12 und Kupplungsplatte 1 erreicht. Es ist von Vorteil, dass die Innenflächen des Aufnahmebereichs 11 der relativ grossen und schweren Kupplungsplatte 1 nicht besonders bearbeitet werden müssen.

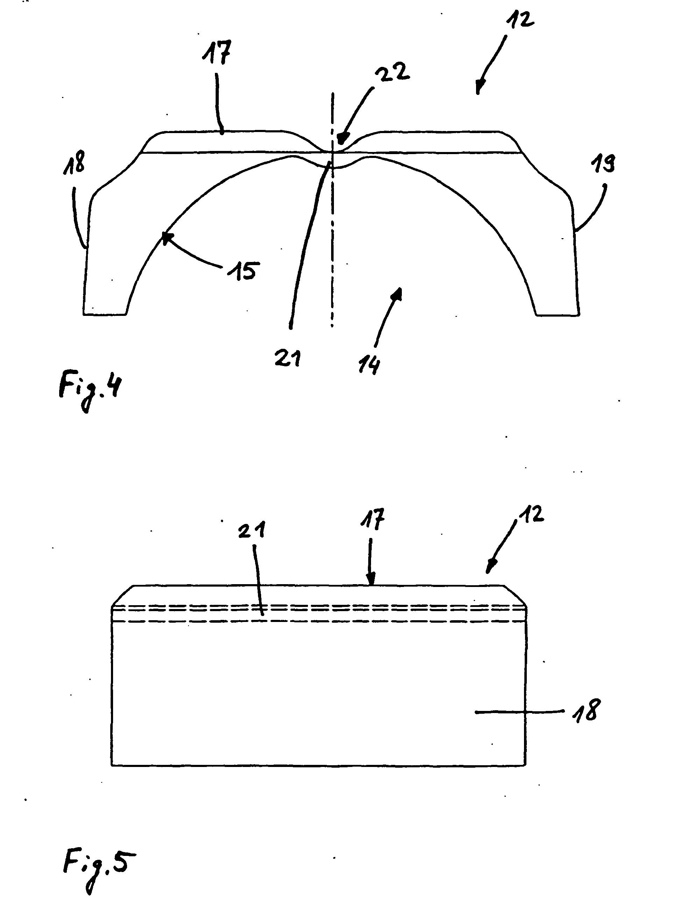

In Figur 4 ist die Sicht auf dem Lagereinsatz 12 in der Richtung quer zur Fahrtrichtung dargestellt. Auf die Lageraufnahmefläche 15 ist eine Quetschrippe 21 und auf der gegenüberliegenden Seite des Lagereinsatzes 12 ist eine Vertiefung 22 ausgebildet. Wie auch in Figur 5 ersichtlich ist, verlaufen die Vertiefung 22 und die Quetschrippe 21 parallel zueinander und verlaufen quer zur Fahrtrichtung. Auf der Lageraufnahmefläche 15 können mehrere Quetschrippen 21 und auf den gegenüberliegenden Seiten des Lagereinsatzes 12 können ebenso mehrere Vertiefungen 22 ausgebildet sein.

Beim Zusammenbau der Lageranordnung wird der Lagereinsatz 12 kraftfrei in den Aufnahmebereich 11 der Kupplungsplatte 1 eingelegt. Der Lagerbock 5 wird ebenso kraftfrei in die Lagerpfanne 14 eingelegt. Anschliessend wird die Kompensationsplatte 16 eingelegt und der Spannbügel 9 mittels Schrauben 10 angezogen. Beim Anziehen des Spannbügels 9 wird zuerst nur die Quetschrippe 21 von der kreisförmige Lagerfläche 13 des Lagerbocks 5 berührt. Beim weiteren Anziehen des Spannbügels 9 wird die Quetschrippe 21 verformt und wird die Lageraufnahmefläche 15 formgleich und spielfrei mit der kreisförmigen Lagerfläche 13 in Übereinstimmung gebracht. Die Quetschrippe 21 verformt sich und fliesst in der Richtung der Vertiefung 22 und auf der Seite der Stützfläche 17 wird ein möglicherweise noch vorhandenes Spiel ausgeglichen. Ebenso werden die Vorderfläche 18 und die Rückfläche 19 im Bereich der Quetschdehnfuge 20 verformt. Hierdurch wird erreicht, dass der Lagereinsatz 12 auf allen Seiten einen spielfreien Sitz im Aufnahmebereich 12 erhält und dass der Lagerbock 5 ebenso spielfrei in die Lagerpfanne 14 aufgenommen wird. Die hohe Sattellast von mehr als 30 Tonnen, die auf die Lageranordnung im Betriebsfall einwirkt, führt dazu, dass die Schmiegung des Lagerbocks 5 an den Lagereinsatz 12 mit fortschreitendem Lebensdauer besser wird, dass die Lagerflächen 13, 15 immer besser miteinander zusammenwirken und dass das Tragbild der Lageranordnung immer besser wird.

## Patentansprüche

1. Lageranordnung für Sattelschlepperkupplungen umfassend eine Sattelkupplungsplatte (1) zur Kupplung eines Sattelzugfahrzeuges mit einem Auflieger und zur Aufsattelung des Aufliegers auf dem Sattelzugfahrzeug und einen Lagerbock (5) mit einer im Wesentlichen kreisförmig ausgebildeten Lagerfläche (13) zur Lagerung der Kupplungsplatte (1) gegenüber dem Sattelzugfahrzeug, wobei auf der Unterseite der Kupplungsplatte (1) einen Aufnahmebereich (11) zur Aufnahme der Lagerfläche (13) des Lagerbocks (5) ausgebildet ist, wobei in dem Aufnahmebereich (11) zwischen der Lagerfläche (13) und der Kupplungsplatte (1) ein Lagereinsatz (12) angeordnet ist, der eine Lagerpfanne (14) mit einer Lageraufnahmefläche (15) aufweist, die im Wesentlichen teilkreisförmig ausgebildet ist und die im eingebauten Zustand des Lagereinsatzes (12) formgleich und spielfrei in Übereinstimmung mit der Lagerfläche (13) des Lagerbocks (5) angeordnet ist, **dadurch gekennzeichnet, dass** auf die Lageraufnahmefläche (15) im ausgebauten Zustand zumindest eine quer zur Fahrtrichtung des Sattelschleppers verlaufenden Quetschrippe (21) ausgebildet ist und dass der Lagereinsatz (12) auf die der Quetschrippe (21) abgewandte Seite eine parallel zur Quetschrippe verlaufende Vertiefung (22) aufweist, wobei ein Wandbereich gebildet wird, der, unter Belastung senkrecht zur Wand, leichter fedemd ist als die angrenzenden Wandbereiche.

2. Lageranordnung für Sattelschlepperkupplungen nach dem Anspruch 1, **dadurch gekennzeichnet, dass** die Lageraufnahmefläche (15) kreisförmig um einer im Wesentlichen quer zur Fahrtrichtung des Sattelschleppers verlaufenden Achse angeordnet ist.

3. Lageranordnung für Sattelschlepperkupplungen nach einem der Ansprüche 1 oder 2, **dadurch gekennzeichnet, dass** der Lagereinsatz (12) auf der den Lageraufnahmeflächen (15) abgewandten Seiten eine obere Stützfläche (17), eine quer zur Fahrtrichtung verlaufend angeordnete Vorderfläche (18) und eine quer zur Fahrtrichtung verlaufend angeordnete Rückfläche (19) aufweist, wobei im eingebauten Zustand die Flächendrücke zwischen dem Lagereinsatz (12) und dem Aufnahmebereich (11) der Kupplungsplatte (1) gleichmässig verteilt über die zusammenwirkenden Flächen aufgenommen werden.

4. Lageranordnung für Sattelschlepperkupplungen nach einem der Ansprüche 1 bis 3, **dadurch gekennzeichnet, dass** die Vorderfläche (18) und die Rückfläche (19) des Lagereinsatzes (12) derart beabstandet von einander angeordnet sind, dass im eingebauten Zustand zwischen Lagereinsatz (12) und Aufnahmebereich (11) eine Quetsch-Dehnfuge (20) gebildet wird und das Spiel zwischen den zusammenwirkenden Flächen ausgeglichen wird.

5. Lageranordnung für Sattelschlepperkupplungen nach einem der Ansprüche 1 bis 4, **dadurch gekennzeichnet, dass** der Lagereinsatz (12) aus einem plastisch verformbaren Werkstoff ausgebildet ist.

6. Lageranordnung für Sattelschlepperkupplungen nach einem der Ansprüche 1 bis 5, **dadurch gekennzeichnet, dass** der Lagereinsatz (12) aus einem polymeren Werkstoff ausgebildet ist.

7. Lageranordnung für Sattelschlepperkupplungen nach einem der Ansprüche 1 bis 6, **dadurch gekennzeichnet, dass** der Lagereinsatz (12) einstückig in einem Kunststoffspritzgussverfahren herstellbar ausgebildet ist.

## Claims

1. Bearing assembly for fifth wheel hitches comprising a fifth wheel coupling plate (1) for coupling a tractor to a semi-trailer and for coupling the semi-trailer to the tractor and a bearing block (5) with a bearing surface (13) of substantially circular configuration for supporting the coupling plate (1) relative to the tractor, a receiving region (11) for receiving the bearing surface (13) of the bearing block (5) being configured on the underside of the coupling plate (1), a bearing insert (12) being arranged in the receiving region (11) between the bearing surface (13) and the coupling plate (1) and comprising a bearing seat (14) with a bearing receiving surface (15) which is of substantially part-circular configuration and which, in the fitted state of the bearing insert (12), is arranged to correspond without play to the bearing surface (13) of the bearing block (5), of which it has the same shape, **characterized in that** at least one deformable rib (21), extending transversely to the direction of travel of the tractor, is configured on the bearing receiving surface (15), in the removed state, and **in that** the bearing insert (12) comprises a recess (22), extending parallel to the deformable rib on the side facing away from the deformable rib (21), a wall region being formed which, under loading perpendicular to the wall, is more resilient than the adjacent wall regions.

2. Bearing assembly for fifth wheel hitches according to Claim 1, **characterized in that** the bearing receiving surface (15) is arranged in a circular manner about an axis extending substantially transversely to the direction of travel of the tractor.

3. Bearing assembly for fifth wheel hitches according to either Claim 1 or 2, **characterized in that** the bearing insert (12) on the sides facing away from the bearing receiving surfaces (15) has an upper support surface (17), a front surface (18) arranged extending transversely to the direction of travel and a rear surface (19) arranged extending transversely to the direction of travel, the surface pressures between the bearing insert (12) and the receiving region (11) of the coupling plate (1) being received, in the fitted state, evenly distributed over the co-operating surfaces.

4. Bearing assembly for fifth wheel hitches according to any one of Claims 1 to 3, **characterized in that** the front surface (18) and the rear surface (19) of the bearing insert (12) are arranged at a distance from one another, such that, in the fitted state, a deformable expansion joint (20) is formed between the bearing insert (12) and receiving region (11) and which compensates for the play between the co-operating surfaces.

5. Bearing assembly for fifth wheel hitches according to any one of Claims 1 to 4, **characterized in that** the bearing insert (12) is configured of a plastically deformable material.

6. Bearing assembly for fifth wheel hitches according to any one of Claims 1 to 5, **characterized in that** the bearing insert (12) is configured from a polymer material.

7. Bearing assembly for fifth wheel hitches according to any one of Claims 1 to 6, **characterized in that** the bearing insert (12) is configured to be manufactured in a single piece in a plastics injection-moulding process.

## Revendications

1. Ensemble de palier pour attelages de semi-remorques comprenant une plaque d'attelage (1) pour l'accouplement d'un véhicule tracteur à une semi-remorque et pour atteler la semi-remorque sur le véhicule tracteur et un bloc palier (5) avec une surface de palier (13) essentiellement circulaire pour le support de la plaque d'attelage (1) par rapport au véhicule tracteur, une zone de réception (11) étant réalisée sur le côté inférieur de la plaque d'attelage (1) pour recevoir la surface de support (13) du bloc palier (5), un insert de palier (12) étant disposé dans la zone de réception (11) entre la surface de palier (13) et la plaque d'attelage (1), lequel présente une cavité de palier (14) avec une surface de réception de palier (15), qui est réalisée essentiellement en forme de cercle partiel et qui est disposée dans l'état monté de l'insert de palier (12) avec une correspondance de forme et sans jeu en coïncidence avec la surface de palier (13) du bloc palier (5), **caractérisé en ce qu'**au moins une nervure d'écrasement (21) s'étendant transversalement à la direction d'avance de la semi-remorque est réalisée sur la surface de réception de palier (15) dans l'état démonté et **en ce que** l'insert de palier (12) présente sur le côté opposé à la nervure d'écrasement (21) un renfoncement (22) s'étendant parallèlement à la nervure d'écrasement, une zone de paroi étant formée, laquelle est plus facilement élastique que les zones de paroi adjacentes lors d'une sollicitation perpendiculairement à la paroi.

2. Ensemble de palier pour attelages de semi-remorques selon la revendication 1, **caractérisé en ce que** la surface de réception de palier (15) est disposée sous forme circulaire autour d'un axe s'étendant essentiellement transversalement à la direction d'avance de la semi-remorque.

3. Ensemble de palier pour attelages de semi-remorques selon l'une quelconque des revendications 1 ou 2, **caractérisé en ce que** l'insert de palier (12) présente, sur les côtés opposés aux surfaces de réception de palier (15) une surface de support supérieure (17), une surface avant (18) s'étendant transversalement à la direction d'avance et une surface arrière (19) s'étendant transversalement à la direction d'avance, les pressions de surface entre l'insert de palier (12) et la zone de réception (11) de la plaque d'attelage (1) étant reçues dans l'état monté de manière répartie uniformément sur les surfaces coopérantes.

4. Ensemble de palier pour attelages de semi-remorques selon l'une quelconque des revendications 1 à 3, **caractérisé en ce que** la surface avant (18) et la surface arrière (19) de l'insert de palier (12) sont espacées l'une de l'autre de telle sorte que dans l'état monté, un joint de dilatation et d'écrasement (20) soit formé entre l'insert de palier (12) et la zone de réception (11), et que le jeu entre les surfaces coopérantes soit compensé.

5. Ensemble de palier pour attelages de semi-remorques selon l'une quelconque des revendications 1 à 4, **caractérisé en ce que** l'insert de palier (12) est réalisé en un matériau déformable plastiquement.

6. Ensemble de palier pour attelages de semi-remorques selon l'une quelconque des revendications 1 à 5, **caractérisé en ce que** l'insert de palier (12) est réalisé en un matériau polymère.

7. Ensemble de palier pour attelages de semi-remorques selon l'une quelconque des revendications 1 à 6, **caractérisé en ce que** l'insert de palier (12) peut être fabriqué d'une seule pièce par un procédé de moulage par injection de plastique.
